(19) Europäisches Patentamt
European Patent Office
Office européen des brevets

(11) EP 3 636 471 B1

(12) **EUROPEAN PATENT SPECIFICATION**

(45) Date of publication and mention of the grant of the patent:
**04.08.2021 Bulletin 2021/31**

(21) Application number: **18814376.2**

(22) Date of filing: **05.06.2018**

(51) Int Cl.:
***B60J 1/02*** *(2006.01)* ***B60J 1/00*** *(2006.01)*

(86) International application number:
**PCT/JP2018/021549**

(87) International publication number:
**WO 2018/225727 (13.12.2018 Gazette 2018/50)**

(54) **RESIN SUBSTRATE FOR PILLARLESS WINDSHIELD**

HARZSUBSTRAT FÜR EINE SÄULENLOSE WINDSCHUTZSCHEIBE

SUBSTRAT EN RÉSINE POUR PARE-BRISE SANS MONTANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.06.2017 JP 2017114315**

(43) Date of publication of application:
**15.04.2020 Bulletin 2020/16**

(73) Proprietor: **Teijin Limited**
**Osaka-shi, Osaka 530-0005 (JP)**

(72) Inventors:
- **NAKAMURA Miwa**
  **Osaka-shi**
  **Osaka 530-0005 (JP)**
- **NAITO Kozo**
  **Osaka-shi**
  **Osaka 530-0005 (JP)**
- **SAITO Yuka**
  **Osaka-shi**
  **Osaka 530-0005 (JP)**
- **YODA Takashi**
  **Osaka-shi**
  **Osaka 530-0005 (JP)**
- **KISHIMOTO Hiroshi**
  **Osaka-shi**
  **Osaka 530-0005 (JP)**

(74) Representative: **Beckmann, Claus**
**Kraus & Weisert**
**Patentanwälte PartGmbB**
**Thomas-Wimmer-Ring 15**
**80539 München (DE)**

(56) References cited:
**DE-A1-102009 034 936**
**JP-A- 2003 026 043**
**JP-A- 2008 094 087**
**JP-A- 2017 081 452**
**JP-Y1- S3 727 128**
**US-A- 5 833 298**
**US-A1- 2014 035 324**
**US-A1- 2016 159 041**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 636 471 B1

## Description

[Technical Field]

The present invention relates to a resin substrate for a windshield having no pillar of a car (hereinafter referred to as "resin substrate for pillarless windshield"). The present invention relates particularly to a resin substrate for the pillarless windshield which is large yet light-weight and provides excellent visibility, and has further realized a high strength to withstand a load calculated based on air resistance under the driving speed of 150 km/h.

[Background Art]

The windshield of a car body, which is conventionally made of inorganic glass, is recently demanded to be made of resin from the viewpoint of reduction of fuel consumption due to weight reduction, molding property integrated with peripheral components, and designability.
In addition, making the car-windshield pillarless can release the driver from oppressive feeling by a pillar for him/her to enjoy a more comfortable drive, as well as secure the safety of a walker by reducing a dead-angle during driving, and thus the need has increased still more recently.
Incidentally, using resin for a windshield has been considered so far based on the structure of the car body in which the windshield is supported by a pillar.
In the case of the above structure of the car body in which the windshield is supported by a pillar, it is known that, as described in the paragraph 0029 etc. of PTL 1, a black resin layer is provided on the periphery and an adhesive is applied on the surface of the black resin layer to fix these window members for the car. Such a structure can prevent the adhesive from being seen from outside of the car.
However, in the case of the above structure of the car body in which the windshield is supported by a pillar, since two-color molding to provide a black resin layer on the periphery is assumed, good visibility is not obtained even when a resin member according to PTL 1 is adopted to a car body having no pillar.
Besides, in PTL 2, provided is a special resin window panel which has a structure of a thick center part and a thin periphery.
However, the resin window panel according to PTL 2, when adopted to a car body having no pillar, is subjected to distortion by air resistance during driving, resulting in poor visibility.
A motorized bicycle may be equipped with a windshield to prevent wind and rain from the front, and commonly adopts a configuration in which a windshield is fixed in mainstay, for example, as in PTL 3.
Such a windshield is, however, not assumed to be used under the condition of driving at a high-speed of about 150 km/h, and thus cannot be used at all for a pillarless windshield of a car.
Though some motorcycles may run at a high-speed of about 150 km/h, they are merely equipped with small-sized windshields sacrificing visibility.
Therefore, there has so far not been realized a resin substrate for the pillarless windshield which is large yet light-weight and provides excellent visibility, and has further realized a high strength to withstand a load calculated based on air resistance under the driving speed of 150 km/h. Similar resin substrates for windshields are disclosed in documents US 2014/035324 A1 and DE 10 2009 034936 A1.

[Citation List]

[Patent Literature]

[PTL 1] Japanese Unexamined Patent Application Publication No. 2016-120703
[PTL 2] Japanese Unexamined Patent Application Publication No. 2002-114028
[PTL 3] Japanese Unexamined Utility Model Application Publication No. 58-178086

[Summary of Invention]

[Technical Problem]

Based on the above situations, an object of the present invention is to obtain a resin substrate for a pillarless windshield which is large yet light-weight and provides excellent visibility, and has further realized a high strength to withstand a load calculated based on air resistance under the driving speed of 150 km/h.

[Solution to Problem]

That is, as for a solution to the problems, the present invention is as disclosed in the appended claims.

[Advantageous Effects of Invention]

In accordance to the present invention, obtained is a resin substrate for the pillarless windshield which is large yet light-weight and provides excellent visibility, and has further realized a high strength to withstand a load calculated based on air resistance under the driving speed of 150 km/h.

[Brief Description of Drawings]

[Fig. 1] A front schematic view from outside a car of a configuration in which a resin substrate for the pillarless windshield is fixed to the cowl as applied to one embodiment of the present invention.

[Fig. 2] A side schematic view from outside a car of a configuration in which a resin substrate for the pillarless windshield is fixed to the cowl as applied to one embodiment of the present invention.

[Fig. 3] A front schematic view from inside a car of a resin substrate for the pillarless windshield as applied to one embodiment of the present invention.

[Fig. 4] A cross-sectional view of A-A' in Fig. 3.

[Fig. 5a] A cross-sectional view corresponding to the position of A-A' in Fig. 3 of the resin substrate for the pillarless windshield as applied to another embodiment of the present invention.

[Fig. 5b] A cross-sectional view corresponding to the position of A-A' in Fig. 3 of the resin substrate for the pillarless windshield as applied to another embodiment of the present invention.

[Fig. 5c] A cross-sectional view corresponding to the position of A-A' in Fig. 3 of the resin substrate for the pillarless windshield as applied to another embodiment of the present invention.

[Fig. 6a] A front schematic view from outside a car of a resin substrate for the pillarless windshield as applied to another embodiment of the present invention.

[Fig. 6b] A front schematic view from outside a car of a resin substrate for the pillarless windshield as applied to another embodiment of the present invention.

[Fig. 7a] A schematic view from oblique front outside a car of the resin substrate for the pillarless windshield as applied to one embodiment of the present invention.

[Fig. 7b] A schematic view from oblique front outside a car of the resin substrate for the pillarless windshield as applied to another embodiment of the present invention.

[Fig. 8a] A front schematic view from outside a car of the cowl for fixing a resin substrate for the pillarless windshield of the present invention as one embodiment.

[Fig. 8b] A front schematic view from outside a car of the cowl for fixing a resin substrate for the pillarless windshield of the present invention as another embodiment.

[Fig. 8c] A front schematic view from outside a car of the cowl for fixing a resin substrate for the pillarless windshield of the present invention as another embodiment.

[Fig. 9a] A side schematic view from outside a car of the cowl for fixing a resin substrate for the pillarless windshield of the present invention as one embodiment.

[Fig. 9b] A side schematic view from outside a car of the cowl for fixing a resin substrate for the pillarless windshield of the present invention as another embodiment.

[Fig. 9c] A side schematic view from outside a car of the cowl for fixing a resin substrate for the pillarless windshield of the present invention as another embodiment.

[Fig. 10] Measurement spots for determining a mean thickness and a variation in thickness of the viewing section.

[Fig. 11a] Measurement spots for determining a mean width of the thick-walled section.

[Fig. 11b] Measurement spots for determining a mean thickness of the thick-walled section.

[Fig. 11c] Measurement spots for determining a mean thickness of the thick-walled section in sectional view of A-A' in Fig. 11b.

[Fig. 12] An image diagram of the simulation result indicating the stress when a load calculated based on air resistance under the condition of driving at 150 km/h is applied by fixing the resin substrate for the pillarless windshield as applied to one embodiment of the present invention to a cowl.

[Description of Embodiments]

Embodiments of the present invention are explained below in turn showing specific examples in drawings, though the present invention is not limited by these.

First, geometry of the resin substrate for the pillarless windshield of the present invention is explained.

Geometry of the resin substrate for the pillarless windshield of the present invention

As for the resin substrate for the pillarless windshield of the present invention, one example is explained using Fig. 1-4.

Fig. 1 is a front schematic view from outside a car of a configuration in which a resin substrate for the pillarless windshield is fixed to the cowl as applied to one embodiment of the present invention.

The resin substrate of the present invention, as shown in Fig. 1, has viewing section (1) in the center, and has the longest side ($S_A$) fixed by cowl (3) which is a part of a car body, opposite side ($S_B$) located substantially parallel to $S_A$, and two sides ($S_C$ and $S_D$) located between the ends of the longest side and those of the opposite side of the longest side, and has thick-walled sections 2B, 2C and 2D each along the side $S_B$, $S_C$ and $S_D$. Further explanation using Fig. 11a is as follows: there exists 2BC and 2BD between 2B and 2C, and 2B and 2D in addition to the 2B, 2C and 2D, and the 2BC and 2BD are preferably also thick-walled sections.

The viewing section in the present invention is located in the center of the resin substrate as shown in Fig. 1, and has a mean thickness ($d_1$) of 3-7 mm. The mean thickness ($d_1$) of the viewing section in the present invention is determined as follows: as show in Fig. 10, in the central area left by evenly excluding a periphery from the resin substrate by 50wt%, along the directions parallel and perpendicular to the longest side of the resin substrate, thickness was measured successively with an interval of 5 cm, and the mean thickness ($d_1$) is determined by averaging the obtained thickness values. Incidentally, the viewing section in the present invention refers to a region having a thickness less than 1.3 times of the mean thickness ($d_1$) of the viewing section, and the thick-walled section in the present invention refers to a part having a thickness 1.3 times or more of the mean thickness ($d_1$) of the viewing section. Incidentally, the thickness in the present invention, when the resin substrate has a curved three-dimensional structure, refers to the shortest distance between the surface inside the car and the surface outside the car at a measuring point.

Also, the resin substrate of the present invention may be fixed to cowl (3), as shown in Fig. 1, by two sides ($S_C$ and $S_D$) between the ends of the longest side and those of the opposite side of the longest side as well as the longest side, and at least the length of each part of $S_C$ and $S_D$ fixed to cowl (3) is preferably 70% or less, more preferably 50% or less of the length of $S_C$ and $S_D$ from the viewpoint of enhancing visibility. Leaving, as explained above, the upper parts of $S_C$ and $S_D$ unfixed to the car body such as cowl (3) enables good visibility, and forming, as explained above, a thick-walled sections along $S_C$ and $S_D$ enables to realize a high strength to withstand a load calculated based on air resistance under the driving speed of 150 km/h. The thick-walled section also is desired to have excellent visibility from such a viewpoint, and may be referred to as thick-walled viewing section while the viewing section may be referred to as thin-walled viewing section.

Fig. 2 is a schematic side view from outside a car of a configuration in which a resin substrate for the pillarless windshield is fixed to the cowl as applied to one embodiment of the present invention. The viewing section (1) seen from the side when fixed to cowl (3), as shown in Fig. 2, preferably slants to the rear of the car body by an angle from vertical direction of 15-85°, and more preferably 20-70° from the viewpoint of air resistance.

Fig. 3 is a schematic front view from inside a car of a configuration in which a resin substrate for the pillarless windshield is fixed to the cowl as applied to one embodiment of the present invention. The resin substrate of the present invention, as explained in Fig. 1, has viewing section (1) in the center, and has the longest side ($S_A$) in the lower part, opposite side ($S_B$) located substantially parallel to $S_A$, and two sides ($S_C$ and $S_D$) between the ends of the longest side ($S_A$) and those of opposite side ($S_B$) of the longest side, and has thick-walled sections 2B, 2C and 2D each along the sides $S_B$, $S_C$ and $S_D$.

Incidentally, the longest side $S_A$ is a part fixed to cowl (3), and thus can be classified as a non-viewing section, and is required only to have a thickness necessary for fixing to cowl (3). Since it is desired to make the fixation firmer, $S_A$ preferably has a thickness similar to that of the above-mentioned thick-walled section. On the other hand, from the viewpoint of enhancing visibility at the vicinity of the fixation to cowl (3), $S_A$ preferably has a thickness similar to that of the viewing section.

Next, Fig. 4 is a cross-sectional view along thickness-wise direction of A-A' in Fig. 3. The resin substrate of the present invention has, as shown in Fig. 4, a thick-walled section in the periphery and a thin-walled viewing section in the center. Fig. 4 shows a structure in which thickness is constant in the thick-walled section, and then decreases continuously as approaching to the viewing section, and becomes constant again in the viewing section. Such a structure enables the resin substrate to secure excellent visibility in each of the thick-walled section and the viewing section, and also some visibility at the boundary (the area having a thickness 1.3 times of the mean thickness of the viewing section)

of the thick-walled section and the viewing section, and further to highly develop high strength by the thick-walled section.

Also, the widths of the thick-walled sections are $L_B$, $L_C$ and $L_D$ in Fig. 3, and $L_B$, $L_C$ and $L_D$ are respectively the shortest distances from $S_B$, $S_C$ and $S_D$ to the position of the nearest viewing section (having a thickness less than 1.3 times of the mean thickness ($d_1$) of the viewing section).

Here, the mean widths ($L_{2C}$ and $L_{2D}$) of the thick-walled section in the present invention are, as shown in Fig. 11a, determined as follows: in the area of thick-walled section (2C and 2D (except the area where thick-walled sections of each side overlap)) along the $S_C$ and $S_D$, the shortest widths ($L_C$ and $L_D$) are measured successively at an interval of 5 cm in the longitudinal direction of each side, and the mean widths ($L_{2C}$ and $L_{2D}$) of the thick-walled section are determined by averaging the obtained width values ($L_C$ and $L_D$).

Also, each mean thickness ($d_{2B}$, $d_{2C}$ and $d_{2D}$) of the thick-walled section in the present invention is, as shown in Fig. 11b, determined as follows: in the area of thick-walled section (2B, 2C and 2D (except the area where thick-walled sections of each side overlap)) along the $S_B$, $S_C$ and $S_D$, thicknesses ($d_B$, $d_C$ or $d_D$) are measured, as shown in Fig. 11c, successively at an interval of 1 mm in the width direction at each position of the shortest width while the position is changed successively at an interval of 5 cm in the longitudinal direction of each side, and the mean thicknesses ($d_{2B}$, $d_{2C}$ or $d_{2D}$) of the thick-walled section are determined by averaging the obtained thickness values.

Also, the length ($L_1$) of the longest side ($S_A$) of the resin substrate in the present invention is not the shortest distance from one end of the longest side to the other end but the length along the geometry of the longest side, which can be obtained, for example, by measuring the length of a string laid along the geometry of the longest side.

In the resin substrate for the pillarless windshield of the present invention, the mean thickness ($d_1$) of the viewing section (1) is 3-7 mm, the length ($L_1$) of the longest side ($S_A$) is 900 mm or more and 2000 mm or less, the mean thicknesses ($d_{2B}$, $d_{2C}$ and $d_{2D}$) of thick-walled sections (2B, 2C and 2D) are respectively 3.0 times or less of the $d_1$, and the total area of thick-walled section (2B, 2C and 2D) accounts for 3-20% of the whole area of the resin substrate.

The mean thickness ($d_1$) of the viewing section preferably has a lower limit of 4 mm or more, and more preferably 5 mm or more. The mean thickness equal to or higher than the lower limit imparts high rigidity, which is preferably. Also, the mean thickness of the viewing section preferably has an upper limit of 6 mm or less. The mean thickness lower than or equal to the upper limit imparts light-weight property easily, which is preferable.

Also, the variation in the thickness of the viewing section, in the central area left by evenly excluding a periphery from the resin substrate by 50wt% as shown in Fig. 10, is preferably within ±10% of the mean thickness ($d_1$) of the viewing section, more preferably within ±7%, and further preferably within ±5%. The variation in the thickness within the above range imparts excellent antifouling property as well as excellent visibility, which is preferable.

Also, the mean thicknesses ($d_{2B}$, $d_{2C}$ and $d_{2D}$) of the thick-walled sections (2B, 2C and 2D) are each preferably 2.5 times or less of the di, more preferably 2.3 times or less, and particularly preferably 2.0 times or less. Also, the area of the thick-walled section preferably accounts for 3-18% of the whole area of the resin substrate, more preferably 3-17%, and particularly more preferably 3-15%. Incidentally, the area of the thick-walled section includes, as shown in Fig. 11a, the areas of 2B, 2C and 2D, and the areas of 2BC and 2BD which are located between 2B and 2C, and 2B and 2D. The mean thicknesses of $d_{2B}$, $d_{2C}$ and $d_{2D}$, and the area of thick-walled section each within the above ranges make a driver hardly sense distortion due to the uneven-thickness structure and realizes both light-weight property and a high strength to withstand a load calculated based on air resistance under the driving speed of 150 km/h, which is preferable.

Further, the lower limits of the length ($L_1$) of the longest side is preferably 1000 mm or more, and more preferably 1100 mm or more. The longest side equal to or longer than the lower limit exerts light-weight effect significantly when inorganic glass is replaced with the resin substrate, which is preferable. Also, the upper limit of the length ($L_1$) of the longest side is preferably 1900 mm or less, and more preferably 1800 mm or less. The longest side shorter than or equal to the upper limit reveals significantly high strength due to uneven-thickness structure, which is preferable.

Also, the ratios ($L_{2C}/L_1$ and $L_{2D}/L_1$) of the average width ($L_{2C}$ and $L_{2D}$) of the thick-walled section (2C and 2D) located along the Sc and $S_D$ to the length ($L_1$) of the longest side ($S_A$) in the resin substrate is preferably 0.010 or more and 0.060 or less, and more preferably 0.020 or more and 0.050 or less, respectively. The ratios ($L_{2C}/L_1$ and $L_{2D}/L_1$) within the above range can achieve both good visibility by locating the thick-walled section out of driver's sight during driving and a high strength to withstand a load calculated based on air resistance under the driving speed of 150 km/h, which is preferable.

Also, the ratio ($W_2/W_1$) of the total weight ($W_2$) of thick-walled sections (2B, 2C and 2D) located along the $S_B$, $S_C$ and $S_D$ to the whole weight ($W_1$) of the resin substrate is preferably 0.070 or more and 0.230 or less, and more preferably 0.090 or more and 0.220 or less. The ratio ($W_2/W_1$) within the above range can achieve both light-weight property and a high strength to withstand a load calculated based on air resistance under the driving speed of 150 km/h, which is preferable. Incidentally, the total weight ($W_2$) of the thick-walled sections includes, as shown in Fig. 11a, the weight of 2B, 2C and 2D, and the weight of 2BC and 2BD which are located between 2B and 2C, and 2B and 2D.

Also, the thick-walled section (2) of the resin substrate preferably includes a configuration in which the thickness of sloped thick-walled section (5) continuously decreases in the direction of viewing section (1). The configuration including the sloped thick-walled section (5) includes the configuration shown in Fig. 5b and Fig. 5c as well as the

configuration shown in Fig. 4 (a sloped thick-walled section is a part denoted as (5C) in Fig. 4, Fig. 5b and Fig. 5c). Adoption of such a configuration makes a driver hardly sense distortion due to the uneven-thickness structure and hardly causes defects such as sagging in the case of the configuration in which a hardcoat layer is laminated on the resin substrate, which is preferable.

Also, when the thick-walled section of the resin substrate includes a configuration in which the thickness of the substrate decreases continuously in the direction of viewing section (1), the thick-walled section of the resin substrate preferably decreases its thickness with a maximum angle of inclination of 45° or less until reaching the viewing section. Adoption of such a maximum angle of inclination makes a driver hardly sense distortion due to the uneven-thickness structure and hardly causes defects such as sagging in the case of the configuration in which a hardcoat layer is laminated on the resin substrate, which is preferable. Also, if a lower limit is to be set, the lower limit of the maximum angle of inclination is, though not limited in particular, is preferably 15° or more at the steepest point. Adoption of the above value as lower limit can achieve good visibility and rigidity, which is preferable. Here, the maximum angle of inclination is the angle $\theta$ shown in Fig. 4. Incidentally, the baseline for measuring the maximum angle of inclination is, as shown in Fig. 10, the line drawn from the measuring point in the viewing section.

Also, among the configurations having sloped thick-walled sections shown in Fig. 4, Fig. 5b and Fig. 5c, the configuration shown in Fig. 4, which includes constant thick-walled section (4) having a constant thickness in the thick-walled section in the resin substrate, can achieve easily a high strength to withstand a load calculated based on air resistance under the driving speed of 150 km/h and an easy fixation to a car body, which is preferable.

Also, in the configuration including constant thick-walled section (4) and sloped thick-walled section (5), the minimum radius of curvature ($R_1$) in the boundary region between the constant thick-walled section (4) and the sloped thick-walled section (5) is preferably 3 mm or more and 30 mm or less. Adoption of the above range of minimum radius of curvature makes a driver hardly sense distortion due to the uneven-thickness structure and hardly causes defects such as sagging in the case of the configuration in which a hardcoat layer is laminated on the resin substrate, which is preferable. Here, the minimum radius of curvature ($R_1$) is, as shown in Fig. 4, a minimum radius of curvature at the position marked by $R_1$.

Also, in the configuration having constant thick-walled section (4) and sloped thick-walled section (5), the ratio ($W_3/W_1$) of the total weight ($W_3$) of thick-walled sections (4B, 4C and 4D) located along the $S_B$, Sc and $S_D$ to the whole weight ($W_1$) of the resin substrate is preferably 0.060 or more and 0.210 or less, and more preferably 0.060 or more and 0.200 or less. Incidentally, the total weight ($W_3$) of the thick-walled section is, as shown in Fig. 3, the sum of the weight of 4B, 4C and 4D, and the weight of 4BC and 4BD which are respectively located between 4B and 4C, and 4B and 4D.

The ratio ($W_3/W_1$) within the above range can achieve both light-weight property and a high strength to withstand a load calculated based on air resistance under the driving speed of 150 km/h, which is preferable.

On the other hand, the configuration shown in Fig. 5a, in which thickness changes discontinuously from the thick-walled section to the viewing section of the resin substrate, though causing a sensation of distortion at the part of discontinuous thickness, reduces a region causing a sensation of distortion by elimination of a sloped thick-walled section, which is preferable.

Also, in the present invention, though the thick-walled section may be formed inside the car and outside the car, the geometry of forming the thick-walled section only inside the car eliminates interference with a windshield wiper, which is preferable. On the other hand, the geometry of forming the thick-walled section outside the car is preferable at least in making rain and wind from the front hardly enter inside the car.

Also, the resin substrate preferably has a curved section with a radius of curvature of 800-5000 mm, and more preferably 500-3000 mm. The curved section within the above range makes a driver hardly sense distortion due to the uneven-thickness structure and realizes a high strength to withstand a load calculated based on air resistance under the driving speed of 150 km/h, which is preferable.

Also, the resin substrate preferably has a maximum projection area of 270,000-1,200,000 $mm^2$, and more preferably 300,000-1,000,000 $mm^2$. The resin substrate within the above range realizes a light-weight property significantly when inorganic glass is replaced with the resin substrate, and reveals significantly high strength due to uneven-thickness structure, which is preferable.

Also, the thicknesses (4B, 4C and 4D) of the constant thick-walled section in the resin substrate are preferably 8-12 mm, and more preferably 9-11 mm. The thicknesses (4B, 4C and 4D) within the above range make a driver hardly sense distortion due to the uneven-thickness structure and realize a high strength to withstand a load calculated based on air resistance under the driving speed of 150 km/h, which is preferable.

Quality of material of the resin substrate for the pillarless windshield of the present invention

Optically-transparent thermoplastic resin is used for the resin substrate for the pillarless windshield of the present invention to impart good visibility during driving, for which the haze of the resin at 6-mm thickness measured according to JISK7105 satisfies 5% or less. The haze at 6-mm thickness measured according to JISK7105 preferably

satisfies 4% or less, and more preferably than 3% or less.

Also, the resin substrate, over the whole region including the thick-walled section, is preferably made of the same optically-transparent thermoplastic resin. This configuration enables one-piece molding integrating the thick-walled section and the thin-walled section, and makes a driver hardly sense distortion due to the uneven-thickness structure, which is preferable.

Methods for molding the resin substrate for the pillarless windshield from the optically-transparent thermoplastic resin include a method of molding a three-dimensional structure by injection compression molding, a method of heat pressing a two-dimensional injection compression molded slab to a three-dimensional structure, a method of molding a three-dimensional structure by injection molding, a method of heat pressing a two-dimensional injection-molded slab to a three-dimensional structure, and a method of heat pressing a two-dimensional extruded sheet to a three-dimensional structure. Among them, a method of molding a three-dimensional structure by injection molding is preferable to suppress the amount of perspective distortion, a method of heat pressing a two-dimensional injection compression molded slab to a three-dimensional structure is more preferable, and a method of molding a three-dimensional structure by injection compression molding is the most preferable.

Optically-transparent thermoplastic resin constituting the resin substrate for the pillarless windshield of the present invention can be made of polycarbonate resin, acrylic resin, cyclic polyolefin resin, polyphenylene ether resin, and the like. Among them, polycarbonate resin has excellent transparency, high shock absorbing property to enhance security at a collision, and excellent impact resistance to be hardly damaged at a light collision, which is preferable.

Polycarbonate resin, acrylic resin, cyclic polyolefin resin, polyphenylene ether resin and the like, which are used as optically-transparent thermoplastic resin, can be used as a resin composition by blending thermoplastic resin other than the main resin component within the range not impairing the characteristics of the present invention.

Further, the resin composition can be prepared by blending, as needed, well-known additives (infrared shields, infrared absorbers, UV absorbers, dyes/pigments, heat ray absorbing compounds, various stabilizers, antioxidants, mold lubricants, bluing agents, hydrolysis modifiers, flame retardants, dripping inhibitors, antistatic agents, and the like), various fillers, and the like.

In particular, the resin substrate for the pillarless windshield is preferably prepared by blending inorganic infrared shield material with the optically-transparent thermoplastic resin to reduce a temperature rise in car room by sunlight.

The inorganic infrared shield material preferably has a particle diameter of 1-800 nm, more preferably 1-600 nm, and further preferably 1-300 nm. The inorganic infrared shield material, when having a particle diameter smaller than 1 nm, exhibits high flocculation effect to easily cause poor dispersibility, and when having a particle diameter larger than 800 nm, causes defect such as high haze in the molded article of transparent resin. This inorganic infrared shield material includes tungsten-based inorganic infrared shield material, lanthanum-based inorganic infrared shield material, tin-based inorganic infrared shield material, and the like. Among them, tungsten-based inorganic infrared shield material is preferable from the viewpoint of infrared shielding property and haze, among which composite tungsten oxide fine particle is particularly preferable.

The optically-transparent thermoplastic resin used in the present invention is preferably polycarbonate resin for its excellence in transparency, heat resistance, mechanical characteristics, dimensional stability, and the like.

For the polycarbonate resin, monomers well-known per se can be adopted such as 2,2-bis(4-hydroxyphenyl)propane, 2,2-bis(4-hydroxy-3-methylphenyl)propane, isosorbide, 1,1-bis(3-methyl-4-hydroxyphenyl)cyclohexane, and the like, and these may be not only homopolymerized, but also copolymerized. Particularly preferable is polycarbonate resin having at least one kind of repeating unit selected from the group consisting of 2,2-bis(4-hydroxyphenyl)propane, 2.2-bis(4-hydroxy-3-methylphenyl)propane, and isosorbide.

The polycarbonate resin preferably has a viscosity average molecular weight of 10,000-40,000. The polycarbonate resin, when having a viscosity average molecular weight of 10,000 or more, has excellent strength, which is preferable, and when having a viscosity average molecular weight of 40,000 or less, has excellent moldability, which is preferable.

The above viscosity average molecular weight (M) of the polycarbonate resin is determined by assigning specific viscosity ($\eta$SP), which is obtained from 100 ml of a methylene chloride solution in which 0.7 g of polycarbonate resin is dissolved at 20°C, to the following formula:

$$\eta_{sp}/c = [\eta] + 0.45 \times [\eta]^2 c$$

wherein, $[\eta]$ represents limiting viscosity, $[\eta] = 1.23 \times 10^{-4} M^{0.13}$, and c = 0.7.

Such a method for determining the viscosity average molecular weight of the polycarbonate resin is explained, for example, in Japanese Unexamined Patent Application Publication No. 2002-129003 bulletin, paragraph [0033]-[0034].

Further, polycarbonate resin having at least one kind of repeating unit selected from the group consisting of

2,2-bis(4-hydroxyphenyl)propane, 2,2-bis(4-hydroxy-3-methylphenyl)propane, and isosorbide is explained below in detail.

First, polycarbonate resin having 2,2-bis(4-hydroxyphenyl)propane as a repeating unit is called bisphenol A and has excellent impact resistance compared to other polycarbonate resin, which is preferable. Next, polycarbonate resin having isosorbide as a repeating unit includes the carbonate constituting unit represented in the following formula (1), and in particular, usage of isosorbide can raise the hardness of the component made of the resin, and lower the amount of perspective distortion change because of its lower index of refraction than other polycarbonate resin, which is preferable. Further, combined use of isosorbide with bisphenol A can raise the hardness of the component made of the resin while maintaining the impact resistance, which is preferable.

[Chem. 1]

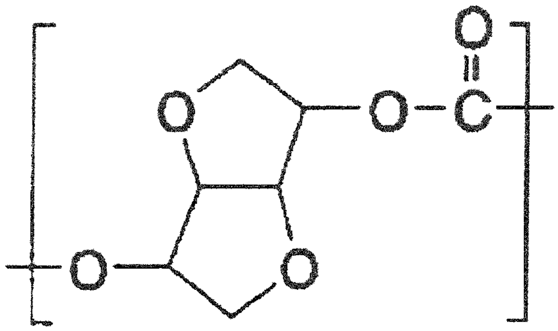

(1)

Lastly, the polycarbonate resin having 2,2-bis(4-hydroxy-3-methylphenyl)propane as a repeating unit can raise the hardness of the component made of the resin and thus lower the amount of perspective distortion change, which is preferable. Further, its combined use with bisphenol A can raise the hardness of the component made of the resin while maintaining the impact resistance, which is preferable.

Physical property improvement of the resin substrate for the pillarless windshield of the present invention

The resin substrate for the pillarless windshield of the present invention may be provided with a hardcoat layer to improve weatherability and abrasion resistance, which is a preferable aspect from the viewpoint of weatherability and abrasion resistance. For the hardcoat layer, a layer well-known per se can be adopted, which can be formed by a method such as a method to wet-coat an acrylic resin layer, a method to wet-coat organosiloxane-based resin to form a cured film, a method to form a plasma CVD layer of an organosilicon compound, a method to laminate a nanosheet layer composed of scaly metal oxide fine particles according to Japanese Unexamined Patent Application Publication No. 2013-170209 bulletin etc., and the like, and these methods may be used in combination as well as used alone.

A preferable hardcoat layer can be formed, for example, by wet-coating a heatsetting acrylic resin layer on the surface of the resin substrate, and further wet-coating thermosetting organosiloxane-based resin to form a cured film on the top. Also, it can be formed by wet-coating a photocurable acrylic resin layer on the surface of the resin substrate.

Also, the plasma CVD layer of the organosilicon compound is formed, for example, by making the vapor of organosilicon compound, such as organosiloxane, organosilane or silazane, and oxygen gas coexist, and depositing by plasma polymerization an organosilicon-based oxidized polymer on the resin substrate coated with the hardcoat layer.

Also, the nanosheet layer composed of scaly metal oxide fine particles can be formed, for example, by preparing a dispersion liquid in which scaly metal oxide fine particles (minimum width of 10 nm or more, thickness of 10 nm or less, minimum width/thickness of 10 or more) are dispersed in a solvent, and applying the dispersion liquid on the resin substrate coated by the hard coat, followed by drying and fixing.

Also, the resin substrate for the pillarless windshield of the present invention can be coated with a water-repellent function layer and a hydrophilic function layer to improve waterproofing property and antifouling property, which is an aspect preferable from the viewpoint of possible adaption to a wiperless windshield.

Also, to the resin substrate for the pillarless window of the present invention, a certification mark, a sun shade, a rear-view mirror, and the like can be added at a place where the addition does not greatly impair visibility.

Fixation of the resin substrate for the pillarless windshield of the present invention to a cowl

The resin substrate for the pillarless window of the present invention is preferably fixed to a car body by a cowl and the like.

Specifically, the longest side and a half-length of two sides each including one of two ends of the longest side of the resin substrate are preferably fixed to a car body by a cowl and the like as shown in Fig. 1. For fixation, a screw,

adhesive, and the like are preferably used.

For the cowl, the geometries described in Fig. 8a-8c and Fig. 9a-9c are preferably used.

Here, for a geometry of the resin substrate having a large curvature as shown in in Fig. 7b and a geometry having thickened 2C and 2D as in Fig. 1, a configuration (as shown in Fig. 8c) in which the both sides of the cowl used to fix the sides of Sc and $S_D$ in Fig. 1 are short is preferable, and further a configuration in which only the longest side ($S_A$) of the resin substrate is fixed to car body (3) is more preferable to achieve both visibility and rigidity.

[Examples]

The present invention is explained using Examples more specifically as follows, however the present invention is not limited by these. The evaluation of the resin substrate for the pillarless windshield was carried out as follows.

Evaluation 1: Simulation of the maximum Von Mises stress

Von Mises stress was simulated using analysis software NXI-deas6.1 for the case where a load of 25.8 kgf (253.0 N) calculated based on air resistance under the condition of driving at 150 km/h is applied from the front to the resin substrate for the pillarless windshield fixed to a cowl, and the maximum value of the Von Mises stress obtained was determined as the value of the maximum Von Mises stress.

In the simulation, adopted were the values of material properties of the polycarbonate such as 1,200 kg/$m^3$ for density, 2,400 MPa for elasticity modulus, 0.38 for Poisson's ratio.

Evaluation 2: Visual observation of distortion

Visual observation was carried out outdoors during daytime under fine weather, by fixing a molded resin substrate on a car body and checking a distant sight outside through the resin substrate from the driver seat, and then the result was evaluated as good when an outside situation/scenery can be seen almost without distortion and the result was evaluated as poor when distortion was observed to affect visibility.

[Example 1]

Resin material

Polycarbonate resin powder (Panlite L-1225WP manufactured by Teijin Chemicals Ltd.) was used, which was prepared from bisphenol A and phosgene by using an interfacial polycondensation method, and had a viscosity average molecular weight of 22,400.

Resin composition

Weighing 99.430 parts by weight of the above polycarbonate resin powder, 0.07 (0.16) parts by weight of infrared shield agent (YMDS-874 manufactured by Sumitomo Metal Mining Co., Ltd, composed of about 23% of $CS_{0.33}WO_3$ (average particle diameter of 5 nm) and an organic dispersion resin), 0.300 parts by weight of benzotriazine-based UV absorber (Tinuvinl577 manufactured by Ciba Specialty Chemicals company), 0.030 parts by weight of phosphorus-based stabilizer (P-EPQ manufactured by Clariant Japan Co., Ltd.), 0.050 parts by weight of hindered phenol-based stabilizer (AO412S manufactured by Asahi Denka Kogyo K. K.), 0.100 parts by weight of fatty acid full ester (VPG861 manufactured by Cognis Japan Co., Ltd.), and 0.020 parts by weight of fatty acid partial ester (Rikemal S-100A manufactured by Riken Vitamin Co., Ltd.) according to the content ratio of each, pre-mixing these, blending the mixture using a blender, melt-kneading using a vent-type twin screw extruder, and pellets of the polycarbonate resin composition was obtained.

Incidentally, the parenthesized content ratio of the infrared shield agent is an amount of inorganic infrared shield material $C_{S0.33}WO_3$ contained in YMDS-874 (the unparenthesized number represents parts by weight of YMDS-874 in the resin composition). The additives were each pre-mixed with polycarbonate (PC) beforehand at a concentration 10-100 times of the final content as a guide, and then these pre-mixtures were mixed using a blender to obtain a total mixture. The vent-type twin screw extruder used was TEX30a (intermeshing, rotation in the same direction, double thread screw) manufactured by Japan Steel Works, Ltd. The extruder has one kneading zone in front of the vent-port. The extrusion conditions included a discharge of 20 kg/h, a screw speed of 150 rpm, a vent vacuum of 3 kPa and an extruding temperature of 280°C from the first supply port to a dice part. Incidentally, production of the resin composition was performed in the atmosphere in which clean air circulated after passing through a HEPA filter, and carefully enough to prevent contamination. The resin composition obtained was formed into a 6-mm thick plate, which was measured for

haze according to JISK7105 standard to give a value of 1.3.

Molding method: Injection compression molding

The pellets of the resin materials were injection compression molded to obtain a resin substrate for a viewing section-pillarless window which is provided with, as shown in Fig. 3, viewing section (1), constant thick-walled section (5) and sloped thick-walled section (4), using a large molding machine (MDIP2100 manufactured by Meiki Co. Ltd., maximum mold clamping force 33540 kN) that is equipped with a 4-axis parallel control mechanism of the platen, and capable of injection press molding. Here, the substrate was molded so as to have the constant thick-walled section (5) and the sloped thick-walled section (4) only inside the car as shown in Fig. 4.

For an injection mold, CENA-V manufactured by Hitachi Metals, Ltd. was used. Injection compression molding was performed under the conditions including a cylinder temperature of 280°C, a hot runner set temperature of 280°C, a mold temperature of 100°C at a fixed side and 100°C at a movable side, a press stroke of 2 mm, a mold moving speed from an intermediate mold clamp state to a final mold clamp state of 0.02 mm/s, and a pressure holding time of 600 sec. The pressure during compression was set at 25 MPa and the pressure was maintained for the pressure holding time. An injection speed was set at 5 mm/s in an area until gate part charge, and at 18 mm/s in a subsequent area. Also, the parting face of the movable side mold was designed not to touch the parting face of the fix side mold at the final advance position. For a runner, a valve gate type hot runner (16 mm in diameter) manufactured by Mold-Masters company was used. Mold compression was started just before the completion of charge with an overlap time of 0.5 sec. Molding was performed under the conditions such that the valve gate was closed immediately after the completion of charge so that the molten resin did not flow back from the gate to the cylinder. In such molding as above, tan$\theta$ which represents the amount of inclination and torsion was maintained at about 0.000025 or less by the 4-axis parallel control mechanism.

The above resin substrate was taken out, and after each part was treated by a hard coat processing according to Japanese Unexamined Patent Application Publication No. 2004-26871 bulletin, $S_A$ and about half-lengths each of $S_C$ and $S_D$ were bonded to a cowl using an adhesive as shown in Fig. 1-2. Further, $S_C$ and $S_D$ were each fixed at two points using screws.

Physical properties of the resin substrate for the pillarless window

The mean thickness ($d_1$) of the viewing section was 6.0 mm, the thickness ($d_2$) of constant thick-walled section (4) was 10 mm, the minimum curvature radius ($R_1$) in a boundary region from the constant thick-walled section (4) to sloped thick-walled section (5) was 5 mm, and the sloped thick-walled section (5) had a maximum angle of inclination of the thickness of 30° in the direction of viewing section (1).

Also, the mean thicknesses ($d_{2B}$, $d_{2C}$ and $d_{2D}$) of the thick-walled sections (2B, 2C and 2D) were each 9.5 mm and 1.6 times of the $d_1$.

Also, the area of the thick-walled sections (2B, 2C and 2D) accounted for 10% of the whole area of resin substrate.

Also, the length ($L_1$) of the longest side ($S_A$) was 1300 mm, the mean widths ($L_{2C}$ and $L_{2D}$) of the thick-walled sections (2C and 2D) present along the $S_C$ and $S_D$ were each 32.0 mm, and the ratios ($L_{2C}/L_1$ and $L_{2D}/L_1$) of the ($L_{2C}$ and $L_{2D}$) to the ($L_1$) were each 0.025.

Also, the length of the $S_B$ was 1100 mm, the lengths of $S_C$ and $S_D$ were each 440 mm, and the shortest distance between $S_A$ and the $S_B$ was 650 mm.

Also, the whole weight ($W_1$) of the resin substrate was 5.96 kg, the total weight ($W_2$) of the thick-walled sections (2B, 2C and 2D) present along the $S_B$, $S_C$ and $S_D$ was 0.68 kg, and their ratio ($W_2/W_1$) was 0.114.

Also, the whole weight ($W_1$) of the resin substrate was as mentioned above and the weight ($W_3$) of the constant thick-walled section (4) was 0.64 kg, and their ratio ($W_3/W_1$) was 0.107.

The resin substrate had a curved section as shown in Fig. 7a, and the maximum curvature radius was 1550 mm.

The resin substrate had a maximum projection area of 780000 $mm^2$.

Evaluation results

On the resin substrate for the pillarless windshield obtained in Example 1, a simulation of Von Mises stress was performed by the method of Evaluation 1. It was revealed that the stress was concentrated, as shown in Fig. 12, at the center of the $S_A$, and at the center part unfixed to the cowl in Sc and $S_D$. Among them, the most stress-concentrated part was the center part unfixed to the cowl in Sc and $S_D$, where the value of the maximum Von Mises stress was 0.46 MPa. Incidentally, the image of the simulation results shown in Fig. 12 displays a part having smaller Von Mises stress with a darker tone and a part having larger Von Mises stress with a brighter tone.

Also, on the resin substrate for the pillarless windshield obtained in Example 1, visual observation of distortion was performed by the method of Evaluation 2. The substrate was evaluated as "good": an outside situation/scenery can

be seen almost without distortion. The visual observation was carried out by five adults, and the evaluation representing the majority on the observers was adopted. There was little difference among the evaluations of each molded body.

[Comparative Example 1]

The resin substrate for the pillarless window was molded under the same conditions as Example 1 except molding a resin substrate having a whole flat surface without a thick-walled section.

Physical properties of the resin substrate for the pillarless window

The mean thickness ($d_1$) of the viewing section was 6.0 mm. The length ($L_1$) of the longest side ($S_A$) was 1300 mm, the length of $S_B$ was 1100 mm, the lengths of $S_C$ and $S_C$ were each 440 mm, and the shortest distance between $S_A$ and $S_B$ was 650 mm.
Also, the whole weight ($W_1$) of the resin substrate was 5.62 kg.
The resin substrate had a curved section as shown in Fig. 7a, and the maximum curvature radius was 1550 mm.
The resin substrate had a maximum projection area of 780000 $mm^2$.

Evaluation results

On the resin substrate for the pillarless windshield obtained in Comparative Example 1, a simulation of Von Mises stress was performed by the method of Evaluation 1. It was revealed that stress-concentrated parts were, as in the image of the simulation results of Example 1 shown in Fig. 12, the center of the $S_A$ and the center part unfixed to the cowl in $S_C$ and $S_D$. Among them, the most stress-concentrated part was the center part unfixed to the cowl in $S_C$ and $S_D$, where the value of the maximum Von Mises stress was 0.59 MPa, which exceeded the value in Example 1 by as much as 22%.
Also, on the resin substrate for the pillarless windshield obtained in Comparative Example 1, visual observation of distortion was performed by the method of Evaluation 2. The substrate was evaluated as "good": an outside situation/scenery can be seen almost without distortion. The visual observation was carried out by five adults, and the evaluation representing the majority on the observers was adopted. There was little difference among the evaluations of each molded body.
Comparison of Example 1 and Comparative Example 1 revealed that adoption of the structure having a specific thick-walled section at periphery, which only increases the whole weight ($W_1$) of the resin substrate by 6.0%, can reduce the value of maximum Von Mises stress by as much as 22% while maintaining light-weight.

[Comparative Example 2]

The resin substrate for the pillarless window was molded under the same conditions as Example 1 except molding a resin substrate having a whole flat surface without a thick-walled section as in Comparative Example 1 by adjusting the thickness of the substrate so that the whole weight ($W_1$) was 5.96 kg, the same as in Example 1.

Evaluation results

On the resin substrate for the pillarless windshield obtained in Comparative Example 2, a simulation of Von Mises stress was performed by the method of Evaluation 1. It was revealed that stress-concentrated parts were, as in the image of the simulation results of Example 1 shown in Fig. 12, the center of the $S_A$ and the center part unfixed to the cowl in $S_C$ and $S_D$. Among them, the most stress-concentrated part was the center part unfixed to the cowl in $S_C$ and $S_D$, where the value of the maximum Von Mises stress was 0.55 MPa, which exceeded the value in Example 1 by as much as 16%.
Also, on the resin substrate for the pillarless windshield obtained in Comparative Example 2, visual observation of distortion was performed by the method of Evaluation 2. The substrate was evaluates as "good": an outside situation/scenery can be seen almost without distortion. The visual observation was carried out by five adults, and the evaluation representing the majority on the observers was adopted. There was little difference among the evaluations of each molded body.
Comparison of Example 1, Comparative Example 1, and Comparative Example 2 revealed that mere increase in the whole weight ($W_1$) cannot reduce the value of maximum Von Mises stress generated, and that adoption of the structure having a specific thick-walled section at periphery can reduce the value of maximum Von Mises stress while maintaining light-weight.

[Industrial Applicability]

The resin substrate for a pillarless windshield according to the present invention is large yet light-weight and provides excellent visibility, and has further realizes a high strength to withstand a load calculated based on air resistance under the driving speed of 150 km/h, and is particularly suitable for a windshield to be attached to an open car and the like.

[Reference Signs List]

1: Viewing section
2: Thick-walled section

- 2B: Thick-walled section along the opposite side located substantially parallel to the longest side
- 2C: Thick-walled section along the side between the ends of the longest side and those of the opposite side of the longest side
- 2D: Thick-walled section along the side between the ends of the longest side and those of the opposite side of the longest side
- 2BC: Thick-walled section between 2B and 2C
- 2BD: Thick-walled section between 2B and 2D

3: Cowl (member of car body)
4: Constant thick-walled section

- 4B: Constant thick-walled section along the opposite side located substantially parallel to the longest side
- 4C: Constant thick-walled section along the side between the ends of the longest side and those of the opposite side of the longest side
- 4D: Constant thick-walled section along the side between the ends of the longest side and those of the opposite side of the longest side
- 4BC: Constant thick-walled section between 4B and 4C
- 4BD: Constant thick-walled section between 4B and 4D

5: Sloped thick-walled section

- 5B: Sloped thick-walled section along the opposite side located substantially parallel to the longest side
- 5C: Sloped thick-walled section along the side between the ends of the longest side and those of the opposite side of the longest side
- 5D: Sloped thick-walled section along the side between the ends of the longest side and those of the opposite side of the longest side

$S_A$: The longest side
$S_B$: Opposite side located substantially parallel to the longest side
$S_C$: Side between the ends of the longest side and those of the opposite side of the longest side
$S_D$: Side between the ends of the longest side and those of the opposite side of the longest side
$L_1$: Length of the longest side
$L_B$: Width of the thick-walled section along opposite sides located substantially parallel to the longest side
$L_C$: Width of the thick-walled section along the side between the ends of the longest side and those of the opposite side of the longest side
$L_D$: Width of the thick-walled section along the side between the ends of the longest side and those of the opposite side of the longest side
$d_C$: Thickness of the thick-walled section along the side between the ends of the longest side and those of the opposite side of the longest side
$\theta$: Maximum angle of inclination of the thickness of thick-walled section until the thick-walled section reaches the viewing section
$R_1$: Minimum curvature radius in the boundary region from the constant thick-walled section to the sloped thick-walled section
PW: Pillarless windshield

## Claims

1. A resin substrate for a pillarless windshield having the longest side ($S_A$) fixed to car body (3), wherein the resin substrate is an uneven-thickness structure having viewing section (1) with a mean thickness ($d_1$) of 3-7 mm and thick-walled section (2) with a thickness of 1.3 times the ($d_1$) or more, and satisfies all requirements of following (a)-(d):

   (a) the resin substrate having thin-walled viewing section (1) in the center, and having thick-walled sections (2B, 2C and 2D) along total three sides of ($S_B$, $S_C$ and $S_D$): opposite side ($S_B$) of the longest side ($S_A$), and two sides ($S_C$ and $S_D$) between the ends of the longest side ($S_A$) and those of the opposite sides ($S_B$) of the longest side,
   (b) the viewing section (1) and thick-walled section (2) being made of an optically-transparent thermoplastic resin satisfying 5% or less of a haze at 6-mm thickness measured according to JISK7105,
   (c) the longest side ($S_A$) having a length ($L_1$) of 900 mm or longer and 2000 mm or shorter,
   (d) the thick-walled sections (2B, 2C and 2D) having mean thicknesses ($d_{2B}$, $d_{2C}$ and $d_{2D}$) each 3.0 times or less of the $d_1$ and an area accounting for 3-20% of a whole area of the resin substrate;

   **characterized in that**
   the resin substrate has a curved surface having a maximum radius of curvature of 500-5000 mm, and
   the resin substrate has a maximum projection area of 270,000-1,200,000 $mm^2$.

2. The resin substrate for the pillarless windshield according to claim 1, wherein ratios ($L_{2C}/L_1$ and $L_{2D}/L_1$) of average widths ($L_{2C}$ and $L_{2D}$) of thick-walled sections (2C and 2D) present along the Sc and $S_D$ to length ($L_1$) of the longest side ($S_A$) in the resin substrate are 0.01 or more and 0.06 or less, respectively.

3. The resin substrate for the pillarless windshield according to claim 1, wherein a ratio ($W_2/W_1$) of a total weight ($W_2$) of thick-walled sections (2B, 2C and 2D) present along the $S_B$, $S_C$ and $S_D$ to a whole weight ($W_1$) of the resin substrate is 0.070 or more and 0.230 or less.

4. The resin substrate for the pillarless windshield according to claim 1, wherein the resin substrate includes a configuration (sloped thick-walled section (5)) in which thickness of thick-walled section (2) decreases continuously in the direction of viewing section (1).

5. The resin substrate for the pillarless windshield according to claim 4, wherein the resin substrate includes a configuration (constant thick-walled section (4)) in which thickness of thick-walled section (2) is constant in the direction of viewing section (1).

6. The resin substrate for the pillarless windshield according to claim 5, wherein a ratio ($W_3/W_1$) of a total weight ($W_3$) of thick-walled sections (4B, 4C and 4D) present along the $S_B$, $S_C$ and $S_D$ to a whole weight ($W_1$) of the resin substrate is 0.060 or more and 0.210 or less.

7. The resin substrate for the pillarless windshield according to claim 4, wherein the thickness of thick-walled section (2) decreases in the direction of viewing section (1) at a maximum angle of inclination of 45° or less.

8. The resin substrate for the pillarless windshield according to claim 5, wherein a minimum curvature radius ($R_1$) in a boundary region from the constant thick-walled section (4) to sloped thick-walled section (5) is 3 mm or more and 30 mm or less.

9. The resin substrate for the pillarless windshield according to claim 1, wherein the resin substrate has thick-walled section (2) only to interior of a car.

10. The resin substrate for the pillarless windshield according to claim 5, wherein thicknesses of constant thick-walled sections (4B, 4C and 4D) in the resin substrate are 8-12 mm.

11. The resin substrate for the pillarless windshield according to claim 1, wherein all regions of the resin substrate including the thick-walled section (2) are made of the same optically-transparent thermoplastic resin.

12. The resin substrate for the pillarless windshield according to claim 1, wherein the optically-transparent thermoplastic

resin is a polycarbonate resin.

## Patentansprüche

1. Harzsubstrat für eine säulenlose Windschutzscheibe, bei der die längste Seite ($S_A$) an einem Fahrzeugkörper (3) befestigt ist,
wobei das Harzsubstrat eine Struktur mit ungleichmäßiger Dicke ist mit Blickbereich (1) mit einer mittleren Dicke ($d_1$) von 3-7 mm und einem dickwandigen Bereich (2) mit einer Dicke des 1,3-Fachen von ($d_1$) oder mehr, wobei alle der folgenden Bedingungen (a)-(d) erfüllt sind:

   (a) das Harzsubstrat weist den dünnwandigen Blickbereich (1) im Zentrum auf und weist den dickwandigen Bereich (2B, 2C und 2D) entlang der gesamten drei Seiten von ($S_B$, $S_C$ und $S_D$) auf: gegenüberliegende Seite ($S_B$) der längsten Seite ($S_A$) und zwei Seiten ($S_C$ und $S_D$) zwischen den Enden der längsten Seite ($S_A$) und denjenigen der gegenüberliegenden Seiten ($S_B$) der längsten Seite,
   (b) der Blickbereich (1) und der dickwandige Bereich (2) bestehen aus einem optisch transparenten thermoplastischen Harz mit 5% oder weniger Trübung bei einer Dicke von 6 mm, gemessen gemäß JISK7105,
   (c) die längste Seite ($S_A$) weist eine Länge ($L_1$) von 900 mm oder länger und 2000 mm oder kürzer auf,
   (d) der dickwandige Bereich (2B, 2C und 2D) weist eine Dicke ($d_{2B}$, $d_{2C}$ und $d_{2D}$) von jeweils dem 3,0-Fachen oder weniger von $d_1$ auf und eine Fläche, die 3-20% der gesamten Fläche des Harzsubstrats ausmacht;

   **dadurch gekennzeichnet, dass**
   das Harzsubstrat eine gewölbte Oberfläche mit einem maximalen Wölbungsradius von 500-5000 mm aufweist und das Harzsubstrat eine maximale Projektionsfläche von 270.000-1.200.000 $mm^2$ aufweist.

2. Harzsubstrat für die säulenlose Windschutzscheibe nach Anspruch 1, wobei die Verhältnisse ($L_{2C}/L_1$ und $L_{2D}/L_1$) der durchschnittlichen Breiten ($L_{2C}$ und $L_{2D}$) der dickwandigen Bereiche (2C und 2D), die vorhanden sind entlang der $S_C$ und $S_D$, zu der Länge ($L_1$) der längsten Seite ($S_A$) in dem Harzsubstrat jeweils 0,01 oder mehr und 0,06 oder weniger betragen.

3. Harzsubstrat für die säulenlose Windschutzscheibe nach Anspruch 1, wobei ein Verhältnis ($W_2/W_1$) eines Gesamtgewichts ($W_2$) der dickwandigen Bereiche (2B, 2C und 2D), die vorhanden sind entlang der $S_B$, $S_C$ und $S_D$, zu einem Gesamtgewicht ($W_1$) des Harzsubstrats 0,070 oder mehr und 0,230 oder weniger beträgt.

4. Harzsubstrat für die säulenlose Windschutzscheibe nach Anspruch 1, wobei das Harzsubstrat eine Konfiguration (geneigter dickwandiger Bereich (5)) aufweist, wobei sich die Dicke des dickwandigen Bereichs (2) in der Richtung des Blickbereichs (1) kontinuierlich verringert.

5. Harzsubstrat für die säulenlose Windschutzscheibe nach Anspruch 4, wobei das Harzsubstrat eine Konfiguration (konstanter dickwandiger Bereich (4)) aufweist, bei der die Dicke des dickwandigen Bereichs (2) in der Richtung des Blickbereichs (1) konstant ist.

6. Harzsubstrat für die säulenlose Windschutzscheibe nach Anspruch 5, wobei ein Verhältnis ($W_3/W_1$) von einem Gesamtgewicht ($W_3$) von dickwandigen Bereichen (4B, 4C und 4D), die vorhanden sind entlang $S_B$, $S_C$ und $S_D$, zu einem Gesamtgewicht ($W_1$) von dem Harzsubstrat 0,060 oder mehr und 0,210 oder weniger beträgt.

7. Harzsubstrat für die säulenlose Windschutzscheibe nach Anspruch 4, wobei die Dicke des dickwandigen Bereichs (2) in der Richtung des Blickbereichs (1) abnimmt mit einem maximalen Neigungswinkel von 45° oder weniger.

8. Harzsubstrat für die säulenlose Windschutzscheibe nach Anspruch 5, wobei ein minimaler Krümmungsradius ($R_1$) in einer Grenzregion von dem konstanten dickwandigen Bereich (4) zu dem geneigten dickwandigen Bereich (5) 3 mm oder mehr und 30 mm oder weniger beträgt.

9. Harzsubstrat für die säulenlose Windschutzscheibe nach Anspruch 1, wobei das Harzsubstrat dickwandigen Bereich (2) nur zum Inneren von einem Auto hat.

10. Harzsubstrat für die säulenlose Windschutzscheibe nach Anspruch 5, wobei die Dicken von konstant dickwandigen Bereichen (4B, 4C und 4D) in dem Harzsubstrat 8-12 mm sind.

**11.** Harzsubstrat für die säulenlose Windschutzscheibe nach Anspruch 1, wobei alle Bereiche von dem Harzsubstrat, einschließlich des dickwandigen Bereichs (2), hergestellt sind aus dem gleichen optisch transparenten thermoplastischen Harz.

**12.** Harzsubstrat für die säulenlose Windschutzscheibe nach Anspruch 1, wobei das optisch transparente thermoplastische Harz ein Polycarbonatharz ist.

**Revendications**

**1.** Substrat en résine pour un pare-brise sans montant ayant le côté le plus long ($S_A$) fixé à la carrosserie (3), dans lequel le substrat en résine est une structure d'épaisseur inégale ayant une section de visualisation (1) d'une épaisseur moyenne ($d_1$) de 3 à 7 mm et une section à paroi épaisse (2) d'une épaisseur de 1,3 fois la ($d_1$) ou plus, et satisfait à toutes les exigences des points (a)-(d) suivants :

(a) le substrat en résine ayant une section de visualisation à paroi mince (1) au centre, et ayant des sections à paroi épaisse (2B, 2C et 2D) le long des trois côtés au total de ($S_B$, $S_C$ et $S_D$) : le côté opposé ($S_B$) du côté le plus long ($S_A$), et les deux côtés ($S_C$ et $S_D$) entre les extrémités du côté le plus long ($S_A$) et de celles des côtés opposés ($S_B$) du côté le plus long,
(b) la section de visualisation (1) et la section à paroi épaisse (2) étant constituées d'une résine thermoplastique optiquement transparente satisfaisant 5 % ou moins d'un voile à 6 mm d'épaisseur mesuré selon JISK7105,
(c) le côté le plus long ($S_A$) ayant une longueur ($L_1$) de 900 mm ou plus longue et de 2 000 mm ou plus courte,
(d) les sections à paroi épaisse (2B, 2C et 2D) ayant des épaisseurs moyennes ($d_{2B}$, $d_{2C}$ et $d_{2D}$) de chacune 3,0 fois ou moins de la $d_1$ et une zone représentant 3 à 20 % d'une zone totale du substrat en résine ;

**caractérisé en ce que**
le substrat en résine a une surface incurvée ayant un rayon de courbure maximal de 500 à 5 000 mm, et
le substrat en résine a une zone de projection maximale de 270 000 à 1 200 000 $mm^2$.

**2.** Substrat en résine pour le pare-brise sans montant selon la revendication 1, dans lequel des rapports ($L_{2C}/L_1$ and $L_{2D}/L_1$) de largeurs moyennes ($L_{2C}$ et $L_{2D}$) de sections à parois épaisses (2C et 2D) présentes le long de $S_C$ et $S_D$ jusqu'à la longueur ($L_1$) du côté le plus long ($S_A$) dans le substrat en résine sont de 0,01 ou plus et de 0,06 ou moins, respectivement.

**3.** Substrat en résine pour le pare-brise sans montant selon la revendication 1, dans lequel un rapport ($W_2/W_1$) d'un poids total ($W_2$) de sections à paroi épaisse (2B, 2C et 2D) présentes le long de $S_B$, $S_C$ et $S_D$ à tout le poids ($W_1$) du substrat en résine est de 0,070 ou plus et de 0,230 ou moins.

**4.** Substrat en résine pour le pare-brise sans montant selon la revendication 1, dans lequel le substrat en résine comporte une configuration (section à paroi épaisse inclinée (5)) dans laquelle l'épaisseur de la section à paroi épaisse (2) diminue de façon continue dans la direction de la section de visualisation (1).

**5.** Substrat en résine pour le pare-brise sans montant selon la revendication 4, dans lequel le substrat en résine comporte une configuration (section à paroi épaisse constante (4)) dans laquelle l'épaisseur de la section à paroi épaisse (2) est constante dans la direction de la section de visualisation (1).

**6.** Substrat en résine pour le pare-brise sans montant selon la revendication 5, dans lequel un rapport ($W_{3/}W_{1,}$) d'un poids total ($W_3$) de sections à paroi épaisse (4B, 4C et 4D) présentes le long de $S_B$, $S_C$ et $S_D$ à tout le poids ($W_1$) du substrat en résine est de 0,060 ou plus et de 0,210 ou moins.

**7.** Substrat en résine pour le pare-brise sans montant selon la revendication 4, dans lequel l'épaisseur de la section à paroi épaisse (2) diminue dans la direction de la section de visualisation (1) à un angle d'inclinaison maximal de 45° ou moins.

**8.** Substrat en résine pour le pare-brise sans montant selon la revendication 5, dans lequel un rayon de courbure minimal ($R_1$) dans une région périphérique depuis la section à paroi épaisse constante (4) jusqu'à la section à paroi épaisse inclinée (5) est de 3 mm ou plus et de 30 mm ou moins.

**9.** Substrat en résine pour le pare-brise sans montant selon la revendication 1, dans lequel le substrat en résine a une section à paroi épaisse (2) uniquement à l'intérieur d'une voiture.

**10.** Substrat en résine pour le pare-brise sans montant selon la revendication 5, dans lequel les épaisseurs des sections à paroi épaisse constante (4B, 4C et 4D) dans le substrat en résine sont de 8 à 12 mm.

**11.** Substrat en résine pour le pare-brise sans montant selon la revendication 1, dans lequel toutes les régions du substrat en résine comportant la section à paroi épaisse (2) sont constituées de la même résine thermoplastique optiquement transparente.

**12.** Substrat en résine pour le pare-brise sans montant selon la revendication 1, dans lequel la résine thermoplastique optiquement transparente est une résine de polycarbonate.

[Fig. 1]

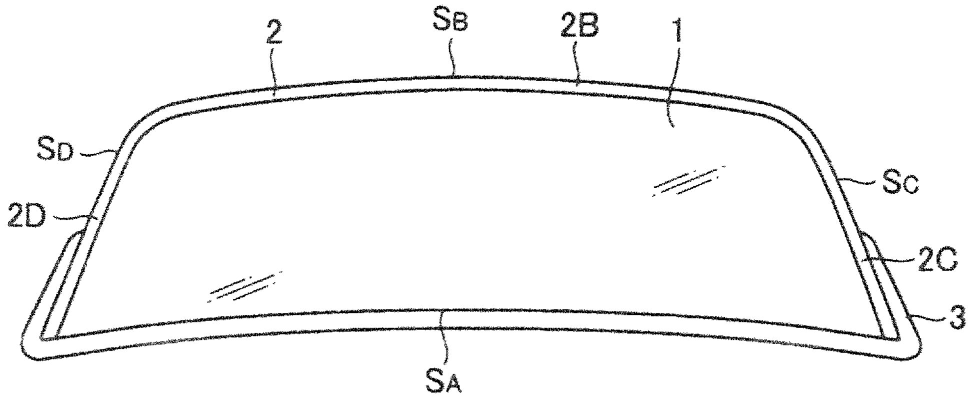


[Fig. 2]

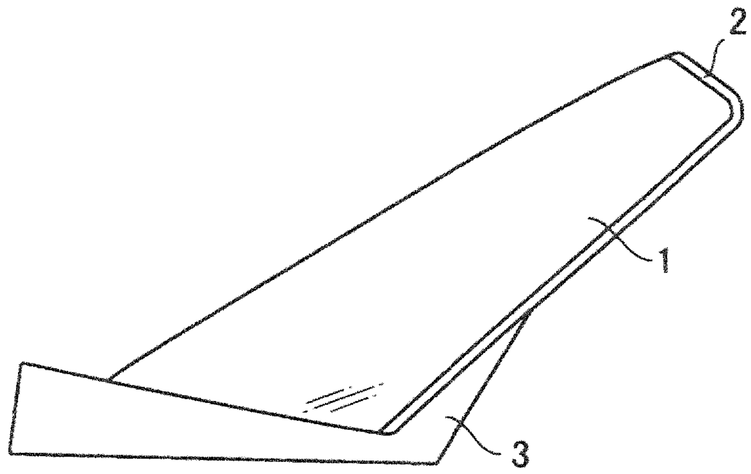


[Fig. 3]

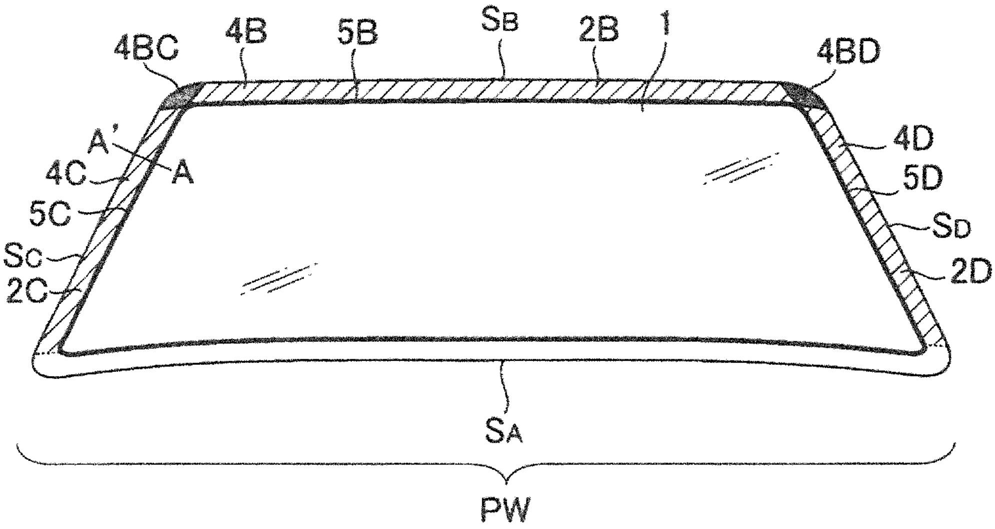

[Fig. 4]

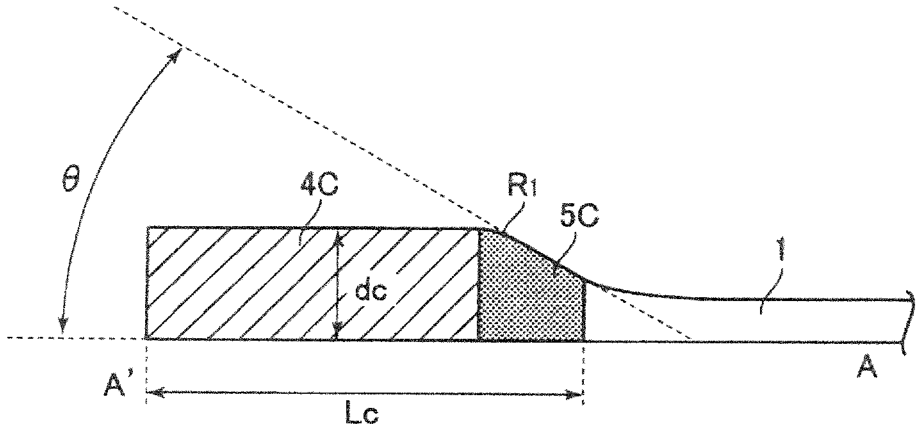


[Fig. 5a]

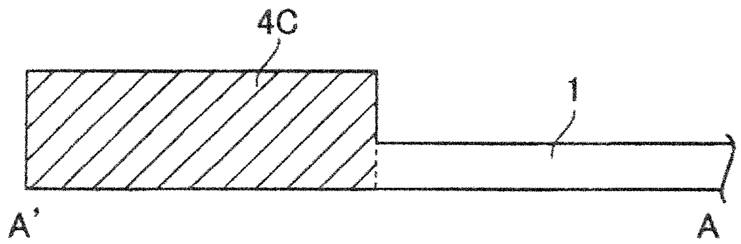


[Fig. 5b]

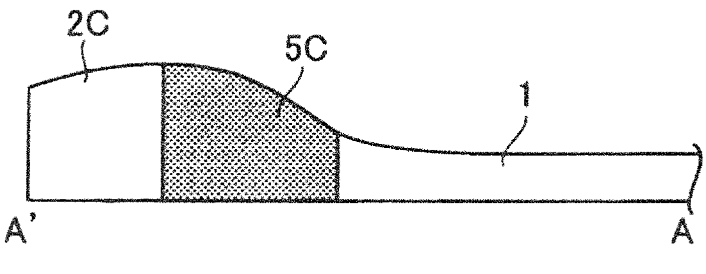


[Fig. 5c]

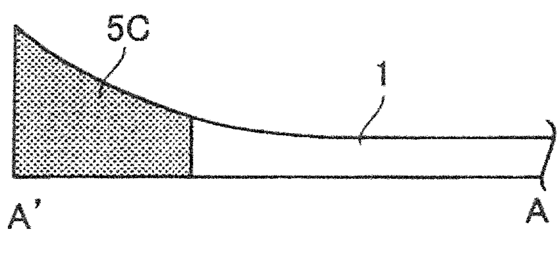

[Fig. 6a]

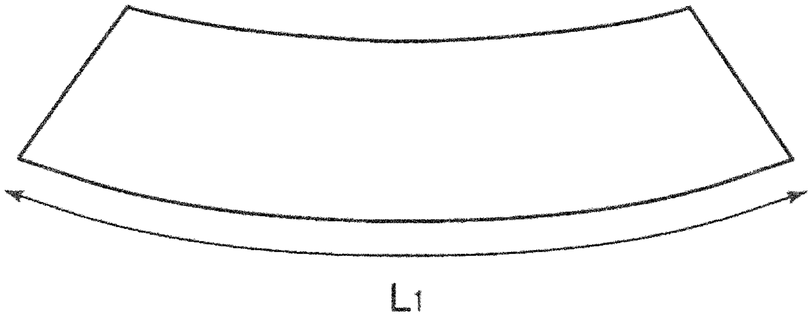


[Fig. 6b]

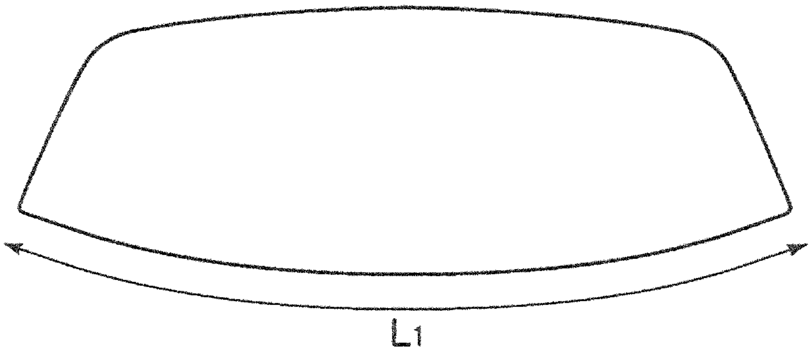


[Fig. 7a]

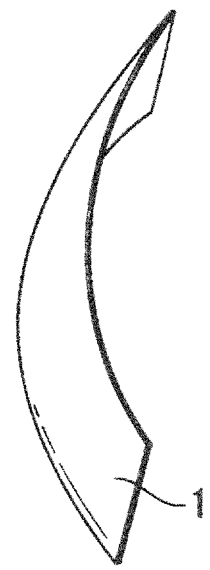

[Fig. 7b]

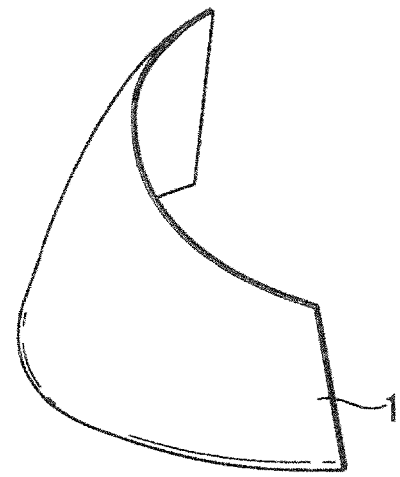


[Fig. 8a]

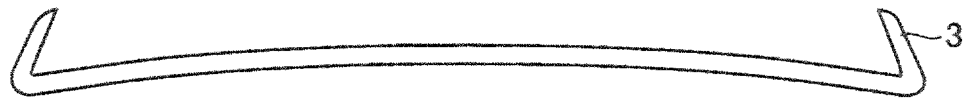


[Fig. 8b]

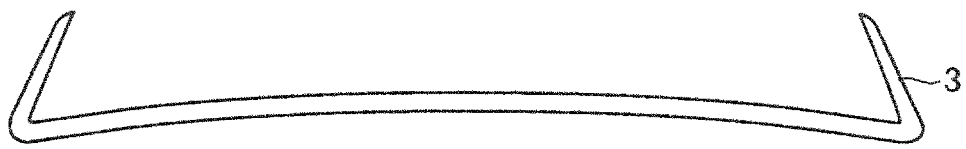


[Fig. 8c]

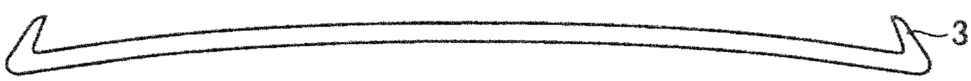


[Fig. 9a]

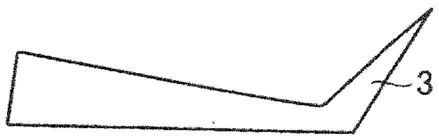

[Fig. 9b]

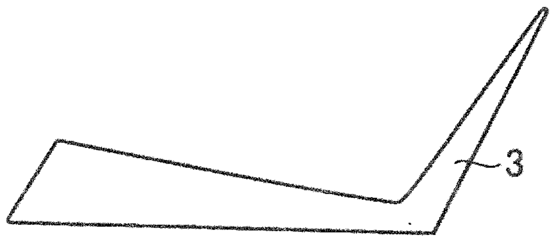


[Fig. 9c]

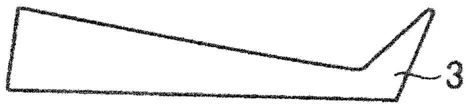


[Fig. 10]

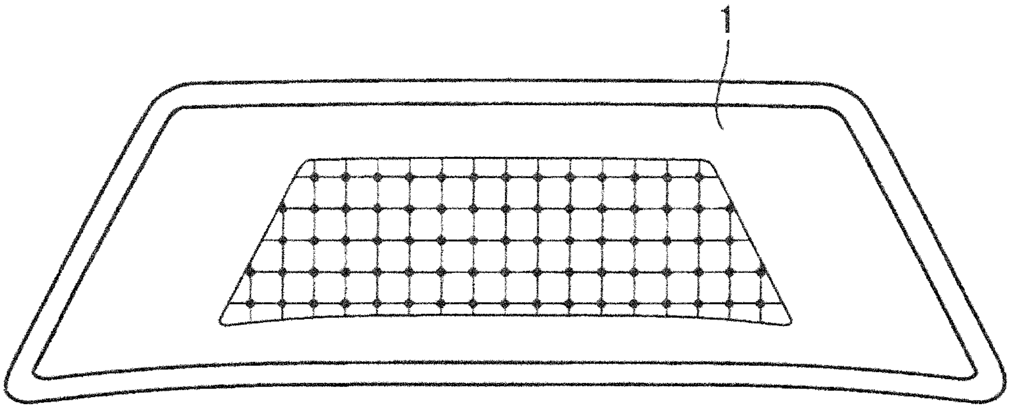


[Fig. 11a]

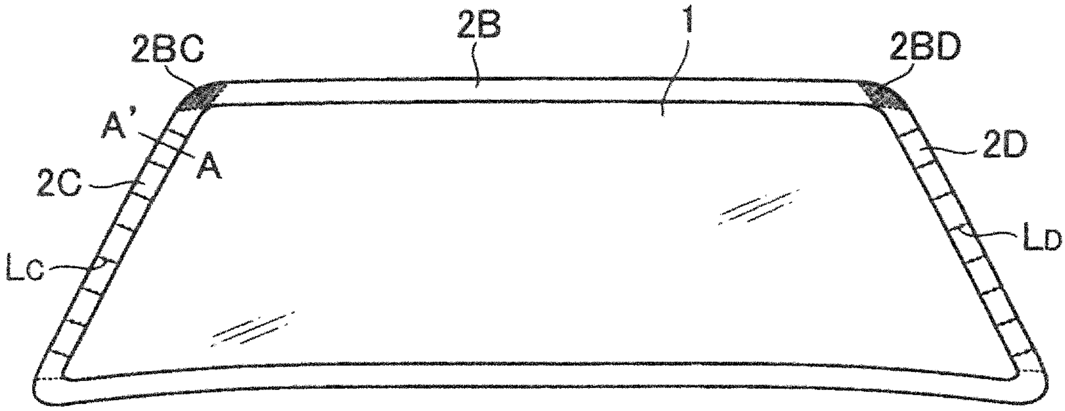

[Fig. 11b]

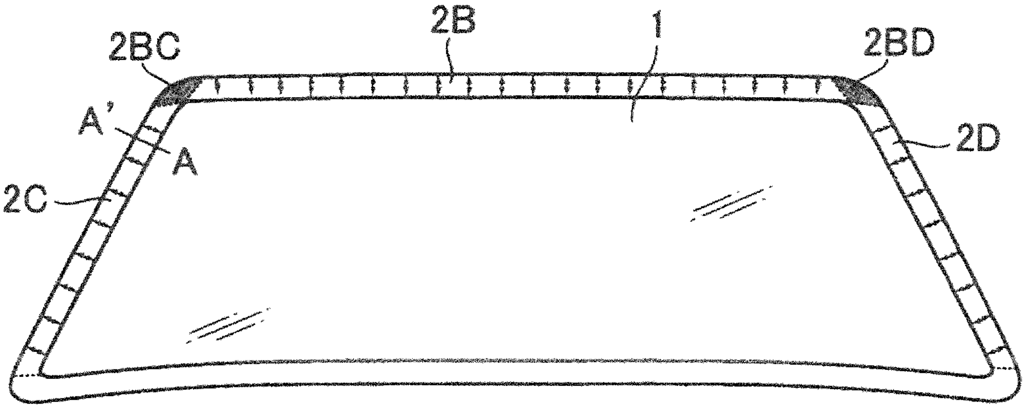


[Fig. 11c]

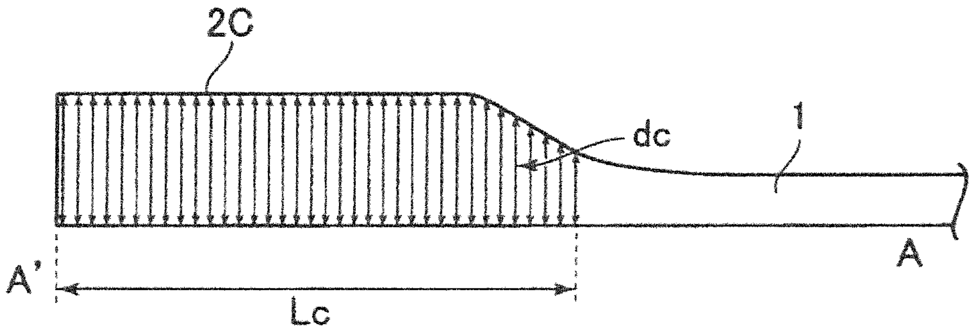


[Fig. 12]

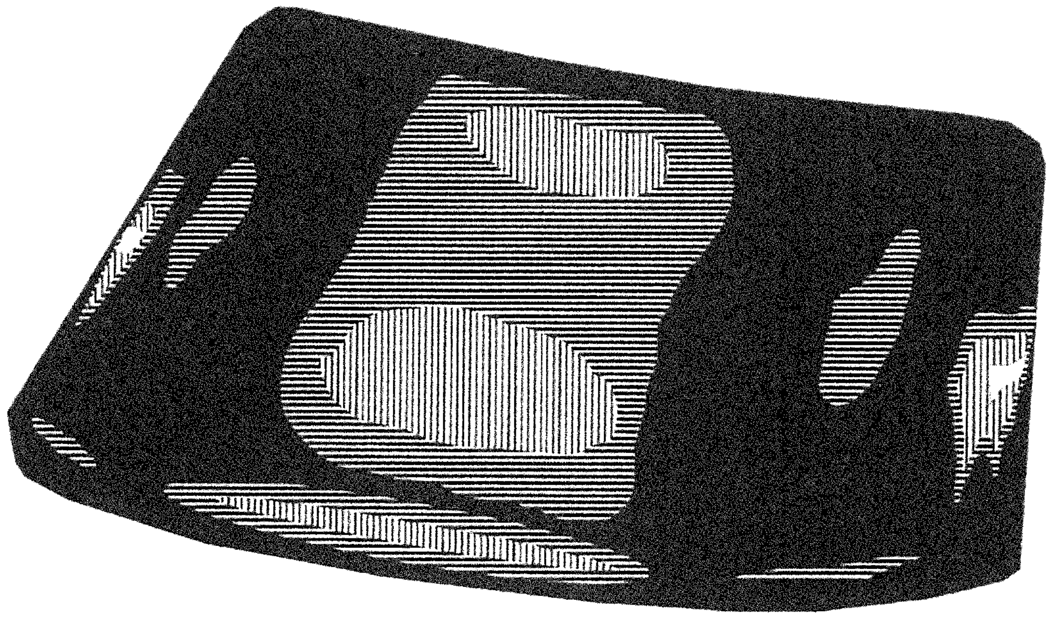

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2014035324 A1
- DE 102009034936 A1
- JP 2016120703 A
- JP 2002114028 A
- JP 58178086 U
- JP 2002129003 A
- JP 2013170209 A
- JP 2004026871 A